# EUROPEAN PATENT APPLICATION

(11) **EP 4 495 302 A1**
(43) Date of publication of application: **22.01.2025**
(21) Application number: 23769967.3
(22) Date of filing: 15.03.2023
(51) Int. Cl.: D01F 1/10, D01F 2/06, D06M 11/11, C08L 1/24

(54) **BIOCIDAL AND PHOTOLUMINESCENT TREATMENT OF VISCOSE FIBRE IMMEDIATELY FOLLOWING THE ADDITION OF CARBON DISULFIDE IN THE CONVERSION OF CELLULOSE INTO VISCOSE (XANTHATION)**

(30) Priority: 18.03.2022 ES 202230231
(71) Applicant: Ancor Tecnológica Canaria, S.L., 35017 Las Palmas de Gran Canaria (Las Palmas) (ES)
(72) Inventor: BELTRÁN AZNAR, Noelia, 35017 Las Palmas de Gran Canaria (Las Palmas) (ES)
(74) Representative: De la Fuente Fernandez, Dionisio
(86) International application number: PCT/ES2023/070154
(87) International publication number: WO 2023/175220

(57) **Abstract**

The present invention relates to a biocidal and photoluminescent treatment of viscose fibre immediately following the addition of carbon disulfide in the conversion of cellulose into viscose (xanthation), which comprises a biocidal composition and an additive that allows the presence thereof to be identified by means of a luminescent effect, wherein the biocidal composition is added in an amount of 0.1-5 wt% of the material and comprises 3-5% phosphate glass with silver, 1-3.5% silicone, 0.1-0.3% aliphatic hydrocarbons and 90-95% water, and the luminescent additive is added in an amount of 0.1-5 wt% of the material and comprises 20-40% silica gel, 10-30% alumina gel, 30-50% calcium fluoride, 0.5-3% erbium (III) fluoride, 5-15% ytterbium (III) fluoride, a maximum of 5% thulium (III) fluoride and a maximum of 1% europium (III) fluoride, with respect to the total weight of the luminescent additive.

## Description

### OBJECT OF THE INVENTION

The present invention relates to a biocidal treatment for viscose fibre with a silver ion-based biocidal composition which allows antimicrobial protection that is applied immediately following the addition of carbon disulfide in the conversion of cellulose into viscose (xanthation), furthermore a luminescent additive that allows ensuring that the fibre has been previously treated with said biocidal product is added, which allows providing confidence to the user and ensuring that the product is present.

### BACKGROUND OF THE INVENTION

Rayon or viscose is a cellulose fibre that is previously solubilised and subsequently regenerated. It is a very versatile fibre and has the same properties in terms of comfort of use as other natural fibres, where it can imitate the feel of silk, wool, cotton or linen. Fibres can be easily dyed other colours. Rayon fabrics are soft, lightweight, cool, comfortable and highly absorbent, but they do not insulate the body, allowing perspiration. To that end, they are ideal for hot and humid climates. Rayon is mainly used in textile manufacturing (blouses, dresses, jackets, lingerie, linings, suits, ties, etc.), in decoration (quilts, blankets, upholstery, covers, etc.), in industry (surgical material, non-woven products, tyre cords, etc.) and other uses (feminine hygiene products).

In the production of viscose, a continuously moving web of cellulose pulp is treated with caustic liquor to form alkaline cellulose, the alkaline cellulose web thus treated is passed into a sealed chamber and uniformly impregnated with carbon sulfide to form cellulose xanthate, the cellulose xanthate is discharged from the sealed chamber to convert it into viscose. The web can be a single web or several overlapping webs of dried cellulose pulp which, after treatment with caustic liquor to form alkaline cellulose, are treated with gaseous or liquid carbon disulfide.

In order to keep the viscose fibre free of microorganisms, fungi, virus or the like, the fibres are impregnated with biocidal products, as described in patent application WO/1998/017165, which relates to a cellulose-based sponge material that is impregnated with a biocide to eliminate the microorganisms present in the material, this is achieved by means of a regenerated cellulose-based sponge fabric, which is provided with an internal reinforcement and is characterised in that the internal reinforcement consists of viscose fibres with a cut fibre length of 5 to 50 mm and is characterised in that this internal reinforcement consists of viscose fibres impregnated with a biocide. Ammonium salts acting as biocides, particularly benzalkonium chlorides, lose their effectiveness in the presence of cotton fibres, so the invention incorporates a biocidal agent that can be a derivative of isothiazolone, benzisothiazolone or benzimidazole, a quaternary ammonium salt. Biocide impregnation can also be performed by means of treatment with glycerol or 1,2-propanediol (propylene glycol). For them to be effective, they must be present in the sponge fabric in an amount that is sufficient to reduce water activity. Many of the mentioned compounds are active not only against fungi and bacteria, but also against yeasts, algae and other microorganisms.

However, viscose fibres impregnated with biocides in this manner do not maintain protection for a long time, so it is necessary to incorporate, in a step of the process, after xanthation, a biocidal product that allows obtaining a final product that is kept free of fungi, bacteria, yeasts, algae and other microorganisms for a longer time.

In the process for producing cellulose xanthate solution, cellulose fibres are mixed and stirred with an aqueous caustic soda solution in sufficient amount to produce a fibre suspension substantially free of lumps or fibre aggregates in said caustic soda solution, the resulting fibre suspension in caustic soda solution is then mixed with carbon disulfide in the presence of an emulsifying agent that acts to induce in the initial step of the mixture. Emulsification of the carbon disulfide in the caustic soda solution must have a microscopically fine particle size to thereby promote the xanthation of cellulose fibres and the dissolution of cellulose xanthate in the caustic soda solution.

The present invention shows a variation in the step of manufacturing viscose or rayon fibre, immediately following the addition of carbon disulfide in the conversion of cellulose into viscose (xanthation), wherein there is incorporated a biocidal product with a source of silver ions and a luminescent additive that allows keeping the resulting fibre protected against different microorganisms, fungi, yeasts, bacteria, virus for a much longer time than conventional methods and a luminescent additive which allows ensuring that the fibre maintains the protection.

### PREFERRED EMBODIMENT OF THE INVENTION

The present invention relates to a method for antimicrobial protection by means of incorporating, in the xanthation process, a biocidal product based on a controlled source of Ag+ ions that allows protection for a longer time than the conventional biocides used in conventional impregnation methods. Furthermore, the biocidal composition incorporates in the process a luminescent additive which allows demonstrating that the part has been treated and is free of microbes, pathogens, virus, etc. The biocidal product would provide the final viscose or rayon fibre with protection capacity against microbial growth which would last for at least 200 washes in clothing manufactured from rayon fibre treated by means of this process.

The process of manufacturing viscose or rayon has the following steps:
1) digestion of cellulose,
2) xanthation,
3) neutralisation, dissolution and liquefaction,
4) spinning.

The present invention modifies the neutralisation, dissolution and liquefaction step, by means of the addition of a biocidal product with a luminescent additive, wherein the biocide consists of an aqueous dispersion that will allow it to be chemically adsorbed on the viscose in dispersion after precutting which is verified immediately following the xanthation process and when most of the excess carbon sulfide from xanthation has been removed. The process must be performed under constant stirring.

Cellulose from cotton fibres is treated with sodium hydroxide, and then mixed with carbon disulfide to form cellulose xanthate, which is then dissolved in more sodium hydroxide. The resulting viscose is extruded in an acid bath or through a small opening to manufacture rayon (sometimes also called viscose). The acid converts the viscose back into cellulose.

Since it is added in the step immediately following xanthation, the biocidal product of the invention allows the silver Ag⁺ ions from a phosphate glass with silver source to associate with the free S⁻ ions of the cellulose coordinated with carbon disulfide CS2 before viscose is formed, in a competition with ionic sodium in solution, it is necessary that there is no excess carbon disulfide, because in equilibrium it interferes with the coordination of the silver ions present in the medium that associate with the cellulose coordinated with the disulfide, furthermore there should not be excess sodium hydroxide in the medium, so the step must be quantitatively controlled. This allows the formation of a stable component that maintains the presence of Ag⁺ ions associated with the product formed by cellulose coordinated with the sulfide, activating antimicrobial protection in the resulting product.

To provide antimicrobial protection to the viscose fibres for at least 200 washes, the concentration of the biocide should be in the order of 0.1 to 5 wt% with respect to the treated viscose material.

The biocide composition comprises: 3-5% phosphate glass with silver, 1-3.5% silicone, 0.1-0.3% aliphatic hydrocarbons and 90-95% water. This composition is added in the process in an amount of 0.1-5 wt% of the treated viscose. The biocidal composition provides silver ions in sufficient amount so as to maintain the biocidal effect of the Ag (+) ions throughout the entire service life of the material. It is important to eliminate excess carbon sulfide due to the possible appearance of unwanted chemical reactions of silver sulfide formation that would contaminate the fibres, furthermore controlling the amount of hydroxide added in the rayon manufacturing process itself. The total contact time between the biocide and the viscose should be no less than 5 minutes and preferably between 5 and 10 minutes.

Furthermore, a luminescent additive which allows indicating that the viscose or rayon fibre has been previously treated with the biocidal composition is also incorporated. The incorporation into the biocidal composition of a luminescent additive formed by metallic oxides (aluminosilicate glass containing rare earth ions by way of doping agents) allows a coating of said composition to be detected and identified by means of infrared light that induces an easily detectable luminescence (green light). This luminous additive exhibits a pattern of emitted light that allows the compound to be unforgeably coded, which distinguish the same with respect to other similar products on the market.

The luminescent additive that acts as a marker allowing the identification of the biocidal composition is added in an amount of 0.1-5 wt% of the material and is composed of 20-40% silica gel in combination with 10-30% alumina gel and 30-50 wt% calcium fluoride. Materials doped with luminescent "rare earth" ions, such as 0.5-3% erbium (III) fluoride, 5-15% ytterbium (III) fluoride, a maximum of 5% thulium (III) fluoride, and a maximum of 1% europium (III) fluoride, are added to this mixture. All these percentages are referred to with respect to the total weight of the luminescent additive.

Silica gel is used as a cold light coating, i.e., it does not involve heat production, being particularly useful in the main physical phenomena that allow the production of light with characteristics such as phosphorescence and fluorescence. Furthermore, it is used as an insulating coating, forming a thin layer on the application surface similar to a laminate, protecting and preserving a surface from the action of water, from scratches or other abrasion damage. Alumina acts as a selective adsorbent allowing the level of fluoride in the mixture to be adjusted downward.

Calcium fluoride doped with luminescent "rare earth" ions significantly increases its fluorescence with broad emission that appears within the range of acceptable targets. Erbium fluoride increases the transmission of infrared light and of the remaining luminescent materials in the marker composition. Erbiumdoped silica glass fibres are the active element to amplify the luminescent effect, in addition, their homogenisation increases due to the presence of alumina. Ytterbium fluoride also increases the amplification of the material as a luminescent marker and thulium (III) fluoride is used to improve infrared emission and to improve up-conversion fluorescence to ultraviolet and visible in fluorinated glasses. The fluorescence of europium is used to improve the effect of the marker additive.

The luminescent additive which acts as an identification marker of the biocidal composition is applied between 0.1 and 5 wt% of the material treated in the hardening process.

This luminescent additive, visible under IR, is formulated to be integrated into the formulations of the treated materials and act as a marker, when irradiated by IR light, in the range of 900 to 990 nanometres.

The different tests have determined that the luminescent additive of the product presents emission only under invisible infrared light with a high intensity brightness, due to the lack of background noise due to the zero autofluorescence of the textile substrate or the surface where it has been applied. Additionally, the luminescence intensity ratios between the different visible emission bands (blue, green and red) observed after the conversion of the invisible infrared reading light, can be tuned on demand (by modifying the concentration level and type of doping "rare earth" ions). In other words, encoding the emitted light using an unforgeable code, by being designed and synthesised on demand at source, providing a novel and disruptive proof of concept for security patterns with light encryption.

The tests applied in the results obtained in the process are:
UNE-EN ISO 20743:2013 Determination of antibacterial activity in textile products
UNE-EN ISO 18184:2019 Determination of antibacterial activity in textile products
ASTM E2149-20: Standard test method for the determination of the activity of immobilised antimicrobial agents under dynamic contact conditions.
-UNE-EN ISO 18184- Test methods for the determination of the antiviral activity of products against specific virus.

The resulting composition was analysed based on bactericidal activity comparing a range of product concentrations in order to assess the product's efficacy against bacteria. This range of concentrations is based on guidelines for chemical antiseptics and disinfectants. The assay demonstrated its antibacterial activity for a period of at least 30 days. It eliminates those microorganisms that may cause infections, the presence of mites or similar problems. It prevents the growth of algae, fungi, virus, moulds and other potential pathogens. It prevents side effects due to the presence of microorganisms such as bad odours, discolouration or damage to the fabric.

The antimicrobial activity of textiles is commonly evaluated using the standard protocol for textiles with antimicrobial activity, JIS L 1902 *(JIS stands for Japanese Industrial Standard),* which is equivalent to the international method, ISO 20743. It is a method of reference in the industry and is performed worldwide. This method seeks to simulate real conditions of the material. A value of R defines whether the product or the material is considered to possess antimicrobial properties. Each sample is inoculated with about 1*105 CFU (colony forming units) and incubated at 37°C, 100% RH for 24 hours.

The value of the antimicrobial activity of the samples tested by means of JIS L 1902 standard is determined by applying the following formula: R=log (B/C)
where B is the mean number of viable bacterial cells on the untreated sample after 24 h of incubation, and C is the mean number of viable bacterial cells on the sample treated with the antimicrobial agent after 24h of incubation.

When R > 2.0, the sample is considered to have biocidal properties.

In the application of the product of the invention, a process of washing contaminated clothing caused by infection in a hospital was carried out.

| **VALUE for *S*. *aureus*** | |
|---|---|
| **Log reduction** | **Percentage of reduction** |
| 5.50 | 99.9997%, |

| **VALUE FOR *K. pneumoniae*** | |
|---|---|
| **Log reduction** | **Percentage of reduction** |
| 5.39 | 99.9996%, |

| **VALUE for human coronavirus 229E ATCC VR-740** | |
|---|---|
| **Log reduction** | **Percentage of reduction** |
| 2.50 | 99.25%, |

In view of the results, it is demonstrated that the treatment performed in the indicated material with the product of the invention not only increases the antimicrobial effect, but it also demonstrates that this effect is augmented depending on the number of washes performed. To provide antimicrobial protection to the viscose fibres for at least 200 washes, the concentration of the biocide should be in the order of 0.1 to 5 wt% with respect to the treated viscose material.

As an added value, the luminescent feature thereof clearly distinguishes the present invention with respect to the state of the art, since it allows the user to visualise where the product has been applied and recognise an encoded light pattern to demonstrate that the product is authentic. With a simple and compact portable hand-held device (pocket spectrometer) it will allow the end user, illuminating with a low-cost commercial infrared laser pointer, to detect the custom-encoded, unforgeable luminescent pattern, and therefore to verify that the applied product is protected with the biocidal composition. This luminescence technology with infrared light and colour encoding using "rare earth" ions is at the forefront of anti-counterfeiting light technology, along the lines of techniques used in the authentication of documents (passports, security inks) and in security encryption for legal tender banknotes. Therefore, its use in the original identification of the biocidal product constitutes without a doubt an absolute novelty that defines a clear substantial difference with other products having similar features on the market. The biocidal product is formulated in an aqueous base, so good drying times, ranging from 2 to 3 minutes, are obtained. This product is easy to apply. Using a nebuliser, it allows effective application on the surface with the help of a cloth.

## Claims

1. A biocidal and photoluminescent treatment of viscose fibre immediately following the addition of carbon disulfide in the conversion of cellulose into viscose (xanthation), **characterised in that** a biocidal composition is incorporated in the neutralisation, dissolution and liquefaction step in an amount of 0.1-5 wt% of the material and comprising: 3-5% phosphate glass with silver, 1-3.5% silicone, 0.1-0.3% aliphatic hydrocarbons and 90-95% water, and furthermore, a luminescent additive which is added in an amount of 0.1-5 wt% of the material and comprises 20-40% silica gel, 10-30% alumina gel, 30-50% calcium fluoride, 0.5-3% erbium (III) fluoride, 5-15% ytterbium (III) fluoride, a maximum of 5% thulium (III) fluoride and a maximum of 1% europium (III) fluoride, with respect to the total weight of the luminescent additive.

2. **The** biocidal and photoluminescent treatment of viscose fibre immediately following the addition of carbon disulfide in the conversion of cellulose into viscose (xanthation) according to claim 1, **characterised in that** the total contact time between the biocidal composition and the viscose should be no less than 5 minutes, preferably between 5 and 10 minutes.

3. **The** biocidal and photoluminescent treatment of viscose fibre immediately following the addition of carbon disulfide in the conversion of cellulose into viscose (xanthation) according to claim 1, **characterised in that** the luminescent additive acts as a marker, when irradiated by IR light, in the range of 900 to 990 nanometres.
